# EUROPEAN PATENT SPECIFICATION

(11) **EP 1 649 382 B1**
(45) Date of publication and mention of the grant of the patent: **30.11.2016**
(21) Application number: 04774131.9
(22) Date of filing: 15.07.2004
(51) Int. Cl.: G06T 11/60, H04N 5/445, H04N 21/426, H04N 21/44, H04N 21/488, H04N 21/81, H04N 21/43, H04N 21/434

(54) **INFORMATION STORAGE MEDIUM STORING GRAPHIC DATA AND APPARATUS AND METHOD OF PROCESSING THE GRAPHIC DATA**
INFORMATIONSSPEICHERMEDIUM, DAS GRAPHISCHE DATEN SPEICHERT UND VORRICHTUNG UND VERFAHREN ZUM VERARBEITEN DER GRAPHISCHEN DATEN
SUPPORT DE STOCKAGE POUR DONNEES GRAPHIQUES, DISPOSITIF ET PROCEDE DE TRAITEMENT DES DONNEES GRAPHIQUES

(30) Priority: 31.07.2003 KR 2003053073; 15.10.2003 US 511110 P
(43) Date of publication of application: 26.04.2006
(60) Divisional application: 08155919.7
(73) Proprietor: Samsung Electronics Co., Ltd., Suwon-si, Gyeonggi-do, 443-742 (KR)
(72) Inventor: JUNG, Kil-Soo, Hwaseong-gun, Gyeonggi-do 445-986 (KR); MOON, Seong-Jin, Suwon-si, Gyeonggi-do 443-738 (KR)
(74) Representative: Appleyard Lees IP LLP
(86) International application number: PCT/KR2004/001761
(87) International publication number: WO 2005/013144

(56) References cited:
- KR-A- 20000 002 690
- KR-A- 20000 011 118
- KR-A- 20010 042 737
- KR-A- 20020 052 190
- Puri A; Schmidt R L; Haskell B G: "Overview of the MPEG Standards" In: Puri A; Chen T: "Multimedia Systems, Standards, and Networks", 22 March 2000 (2000-03-22), CRC Press, XP55027909, ISBN: 978-0-20-390844-0 * section IV.B *
- "Digital Video Broadcasting (DVB); Subtitling systems; ETSI EN 300 743", IEEE, LIS, SOPHIA ANTIPOLIS CEDEX, FRANCE, vol. BC, no. V1.2.1, 1 October 2002 (2002-10-01), pages 1-48, XP014001877, ISSN: 0000-0001
- "MPEG-2, systems part, 2nd edition", 1.2.2000,, no. 13818-1:2000, 1 February 2000 (2000-02-01), XP030001501, ISSN: 0000-0514
- "18.1.3 Increasing Frame-Buffer Memory Bandwidth" In: Foley J D; van Dam A; Feiner S K; Hughes J F: "Computer Graphics, Principles and Practice", 1 January 1996 (1996-01-01), Addison-Wesley, XP002676626, ISBN: 0201121107 pages 858-859, * page 858, last paragraph - page 859, line 1 * * figure 18.2 *
- KEVIN BARRON ET AL: "Normative Composition: Problem definition and initial thoughts", 42. MPEG MEETING; 02-02-1998 - 06-02-1998; SAN JOSE; (MOTION PICTURE EXPERT GROUP OR ISO/IEC JTC1/SC29/WG11), no. M3193, 26 January 1998 (1998-01-26), XP030032466, ISSN: 0000-0315

## Description

The present invention relates to graphic data processing, and more particularly, to an information storage medium including graphic data having presentation in- formation, and an apparatus and method of processing the graphic data.

Various data compression formats are used to transmit video and audio data through broadcasting or store the video and audio data in a storage medium. Among the data compression formats, motion picture experts group (MPEG)-2 transport stream (TS) multiplexes and stores video and audio data by dividing the video and audio data into packets having a predetermined size. Since graphic data, as well as video data, is displayed on a screen, the MPEG-2 TS stored in an information storage medium includes the graphic data. The graphic data roughly comprises subtitle graphic data and navigation graphic data.

The graphic data included in the MPEG-2 TS is decoded in a graphic data processing apparatus and output to a display screen. Together with the graphic data, time information indicating when the graphic data is transmitted to a variety of buffers disposed inside the graphic data processing apparatus and time information indicating when the graphic data of a completely composed screen is output and stored in the information storage medium. Times indicated by the time information should be properly set so that graphic data processing may be performed efficiently. Further, a configuration of the buffers in the graphic data processing apparatus determines an efficiency of the graphic data processing apparatus. A conventional graphic data processing apparatus has a disadvantage in that the graphic data processing apparatus cannot reuse a graphic object of which a graphic screen is composed, thereby deteriorating the efficiency in the graphic data processing.

The present invention provides an information storage medium including graphic data that newly defines presentation information included therein to improve an efficiency in graphic data processing and an apparatus and method of processing the graphic data.

As described above, if graphic data composition information and presentation information are used, a graphic object is reusable during graphic data processing. Accordingly, a time taken to process graphic data is reducible and memory area may be saved.

The standard ETSI EN 300 743, titled "Digital Video Broadcasting (DVB); Subtitling systems", is a relevant publication. In this standard, timing information is included only in the timestamps of the MPEG-2 TS headers. In the invention defined in the claims, a first presentation time stamp is included in the page composition segment and a second presentation time stamp in the object display segment.
FIG.1 is a diagram illustrating a structure of MPEG-2 TS for graphic data according to a first embodiment of the present invention;
FIG. 2 is a block diagram of an apparatus for processing graphic data according to a second embodiment of the present invention;
FIG. 3 is a diagram illustrating a third embodiment of the present invention of the graphic data;
FIG. 4A is a diagram illustrating a state in which a first display set having a page composition segment (PCS) with a page id=1 is stored in buffers;
FIG. 4B is a diagram illustrating a state in which a second display set having the PCS with the page id=2 is stored in the buffers;
FIG. 4C is a diagram illustrating a state in which a third display set having the PCS with the page id=3 is stored in the buffers;
FIG. 4D is a diagram illustrating a state in which a fourth display set having the PCS with the page id=4 is stored in the buffers;
FIGS. 5A-D are diagrams illustrating a process of inputting and outputting data to and from the buffers in accordance with a passage of time;
FIG. 6 is a detailed block diagram of a second buffer;
FIG. 7 is a flow chart illustrating a process of outputting graphic display data of a completely composed screen to a display device;
FIG. 8A is a flow chart illustrating a process of outputting a decoded graphic object; and
FIG. 8B is a flow chart illustrating a process of inputting the graphic object to a decoder.

According to the present invention there is provided an apparatus and method as set forth in the appended claims. Other features of the invention will be apparent from the dependent claims, and the description which follows.

Reference will now be made in detail to the embodiments of the present invention, examples of which are illustrated in the accompanying drawings, wherein like reference numerals refer to the like elements throughout. The embodiments are described below to explain the present invention by referring to the figures.

Graphic data, which is displayed together with video data, is classified into subtitle graphic data and navigation graphic data. The subtitle graphic data is screen description data, such as superimposed dialog, and the navigation graphic data is graphic data regarding menus, such as buttons used in navigating the video data.

A subtitle graphic data stream and a navigation graphic data stream are processed by different graphic data processing apparatuses in a video reproduction system. However, the graphic data processing apparatuses have a common configuration. The graphic data processing apparatuses process the subtitle graphic data stream and the navigation graphic data stream which are coded in a form of a motion picture experts group (MPEG) -2 transport stream (TS).

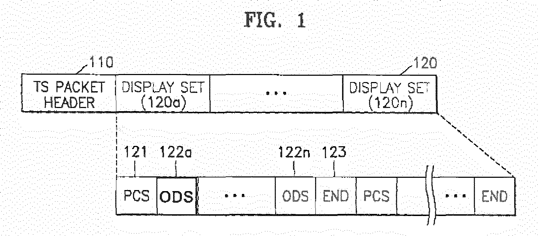

FIG.1 is a diagram illustrating a structure of MPEG-2 TS for graphic data according to a first embodiment of the present invention.

Referring to FIG. 1, the graphic MPEG-2 TS includes a TS Packet header 110 and a data packet 120. The data packet 120 represents subtitle graphic data and navigation graphic data, and includes display sets 120a through 120n, which are graphic data groups displayed on one graphic screen.

The display set 120a, 120b... or 120n is a group of graphic data output to one display screen. Referring to FIG. 1, the display set 120a, 120b... or 120n includes at least two segments. That is, one display set must include a page composition segment (PCS) 121 and an end segment END 123. An object display segment (ODS) is optionally included in the display set 120a, 120b... or 120n, and a plurality of ODSs 122a through 122n may be included in the display set 120a, 120b... or 120n, if necessary. Each of the different segments will be explained in detail hereinbelow.

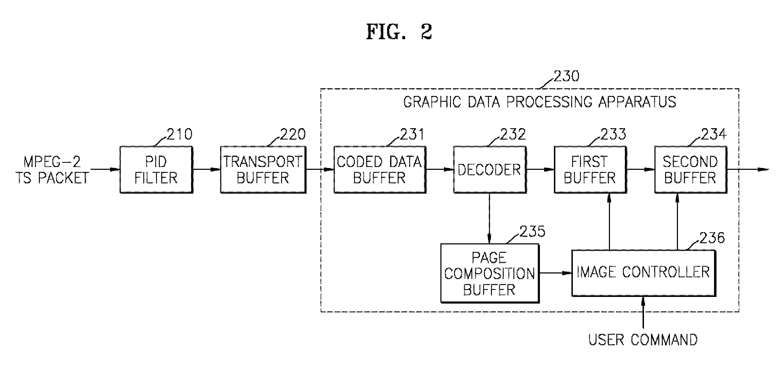

The PCS 121 includes composition information of the ODSs 122a through 122n displayed on one screen. That is, the PCS 121 includes position information indicating where objects are displayed on the screen and time information indicating when the objects are output to a display device. The time information is called presentation time stamp (PTS) information. Accordingly, the PCS 121 includes the PTS information. In an apparatus for processing graphic data which will be described with reference to FIG. 2, the PTS information indicates when graphic screen data, which is composed of the ODSs 122a through 122n necessary to compose one graphic screen, is output from a second buffer 234 to the display device.

The ODSs 122a through 122n include subtitle graphic object data and navigation graphic object data, and may contain size information, such as a width and a height, or color table information of a pertinent object. The size information and color table information will not be described in detail, but may be included in a separate segment of the display set 120a, 120b... or 120n. The ODSs 122a through 122n also include the PTS information thereof. The PTS information of the ODS 122 through 122n indicates when the ODSs 122a through 122n are stored in a first buffer 233 of the graphic data processing apparatus 230. The END 123 indicates the end of one display set 120a, 120b... or 120n.

Two types of presentation information exist. That is, when graphic data and page composition information which defines a page composition of the graphic data, one type of presentation information indicates when graphic screen data exist, which is composed with reference to the page composition information of the graphic data, is output to the display screen. The presentation information is recorded in the page composition segment (PCS) 121 including the page composition information.

When a graphic object of which the graphic data screen is composed, another type of the presentation information indicates when the graphic object is decoded in a decoder and is outputted. If a time taken to decode the graphic object in the decoder is 0, the presentation information may be considered as being information indicating when the graphic object is input to the decoder to be decoded.

FIG. 2 is a block diagram of a graphic data processing apparatus 230 for processing graphic data according to a second embodiment of the present invention.

The graphic data processing apparatus 230 includes a coded data buffer 231, a decoder 232, a first buffer 233, a second buffer 234, a page composition buffer 235 and an image controller 236.

The subtitle graphic stream and the navigation graphic stream, which are stored in a form of an MPEG-2 TS in the information storage medium, pass through a read buffer (not shown) and a source de-packetizer (not shown) in which an arrival time stamp (ATS) that had been added to the MPEG-2 TS is removed, and further, are input to a transport packet identifier (PID) filter 210 in the form of an MPEG-2 TS packet. Input timing of a first byte of the MPEG-2 TS packet input to the PID filter 210 is determined by ATS information contained in a first header of the MPEG-2 TS packet. Further MPEG-2 TS packets are input to the PID filter 210 according to aTSU_recording_rate.

The PID filter 210 determines, with reference to a PID of the MPEG-2 TS packet, whether or not the input MPEG-2 TS packet has a desired PID value, and transmits MPEG-2 TS packets having the desired PID values to a transport buffer 220. Since buffering and delay do not theoretically occur in the PID filter 210, the MPEG-2 TS packets are output immediately after being input to the PID filter 210.

The transport buffer 220 receives an MPEG-2 TS packet having a specific PID value output from the PID filter 210. That is, the transport buffer 220 performs a queue operation to temporarily store the MPEG-2 TS packet before the MPEG-2 TS packet is input to the graphic data processing apparatus 230. Once the MPEG-2 TS packet is input to the transport buffer 220, a header of the MPEG-2 TS packet and a header of a PES packet are removed. Further, referring to FIG. 1, the header 110 of the MPEG-2 TS packet for the subtitle graphic data and navigation graphic data includes PTS information. After the header of the MPEG-2 TS packet is removed, the PTS information indicates when the data packet 120, including of the display sets 120a, 120b ... and 120n shown in FIG. 1, is input to the coded data buffer 231.

The coded data buffer 231 receives the subtitle graphic data stream and the navigation graphic data stream in a coded state and buffers the subtitle graphic data stream and the navigation graphic data stream that are to be processed in the graphic data processing apparatus 230. The subtitle graphic data stream and the navigation graphic data stream input to the coded data buffer 231 are output from the coded data buffer 231 according to the PTS information included in the ODS 122a through 122n.

The PTS information of the ODS 122a through 122n is, for example, information indicating when a storage of the ODS 122a through 122n in the first buffer 233 ends, since an ideal decoding time of the graphic data in the decoder 232 is 0. That is, a time when the ODS 122a through 122n is output from the coded data buffer 231 is equal to a time when the ODS 122a through 122n is stored in the first buffer 233. The PTS information of the ODS 122a through 122n indicates not only the time when the ODS is output from the coded data buffer 231 but also the time when the ODS 122a through 122n is stored in the first buffer 233 after being decoded. However, since time is actually taken for the decoder 232 to decode the ODS 122a through 122n PTS values of two ODSs, for example, 122a and 122b have a predetermined time interval therebetween in consideration of a time taken to decode a previous object.

The decoder 232 decodes the input subtitle graphic data and input navigation graphic data. After the input subtitle and input navigation graphic data are decoded, the decoded PCS 121 is output to the page composition buffer 235 and the decoded ODS 122a through 122n is output to the first buffer 233. Theoretically, a time taken to decode the input data in the decoder 232 is 0. Thus, the decoding operation is called an instant decoding operation.

The page composition buffer 235 stores the PCS 121 which is decoded and output from the decoder 232.

The first buffer 233 stores the ODS 122a through 122n, which is decoded in the decoder 232, according to object identifier object_id of the ODS 122a through 122n. Since the decoded object data is stored in the first buffer 233, one object is reusable several times before the first buffer 233 is completely reset.

The second buffer 234 stores data right before graphic screen data of a screen, which is composed of graphic data objects necessary to display the subtitle graphic data and the navigation graphic data on the display device, is output. The data stored in the second buffer 234 is output to the display device according to the PTS information of the PCS 121 having page composition information of a pertinent page.

The image controller 236 controls, with reference to object identifiers (i. e., object_id), objects to be transmitted from the first buffer 233 to the second buffer 234 and to be displayed on one page. That is, the image controller 236 controls the first buffer 233 to select the graphic data object necessary to compose the pertinent page (i.e. screen), based on the page composition information of the PCS data output from the page composition buffer 235, and to transmit selected graphic data object from the first buffer 233 to the second buffer 234. The image controller 236 transmits the page composition information to the second buffer 234 to compose the display screen. Further, when the image controller 236 receives a user operation from a user, the image controller 236 controls the above elements to select the subtitle graphic data and the navigation graphic data having a different PID and composes a display screen.

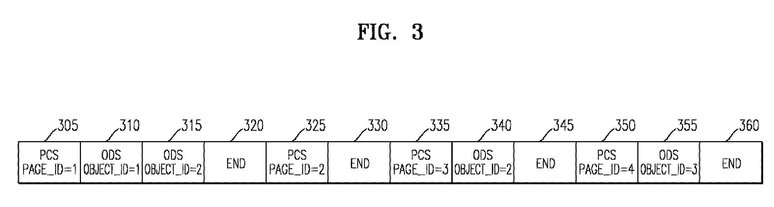

FIG. 3 is a diagram illustrating a third embodiment of the present invention of graphic data.

An operation of processing the graphic data having display sets 120a through 120n in a graphic data processing apparatus 230 and displaying the processed graphic data on a display screen will be explained in detail with reference to FIG. 3.

Referring to FIG. 3, subtitle graphic data and navigation graphic data have four display sets 305 through 320, 325 through 330, 335 through 345, and 350 through 360. As an MPEG-2 TS including a plurality of display sets, passes through the decoder 232, the subtitle graphic data and the navigation graphic data included in the ODS 122a through 122n is stored in the first buffer 233 and the page composition information contained in the PCS 121 is stored in the page composition buffer 235. Further, both the graphic data and the page composition information are, respectively, transmitted to the second buffer 234 based on respective PTS information. The operation will be explained below. A header of each display set is not shown in FIG. 3 for convenience of description.

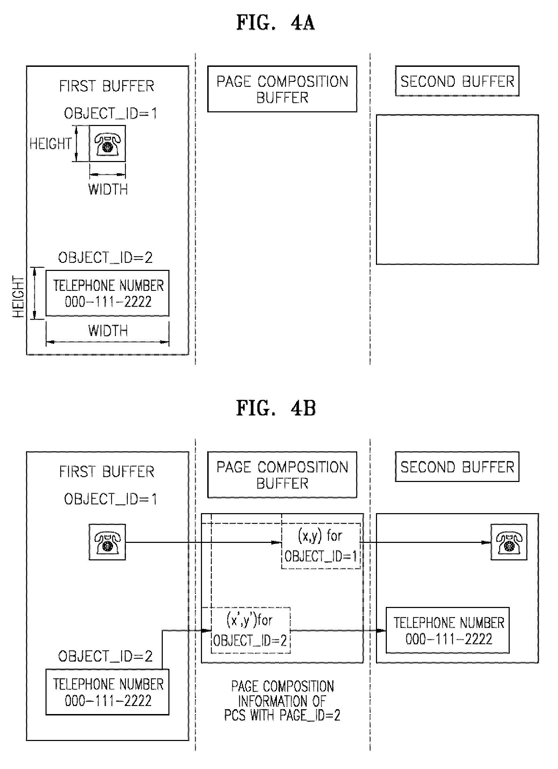

FIG. 4A is a diagram illustrating a state in which a first display set 305 through 320 having a PCS 305 with a page id=1 is stored in buffers.

Graphic data of an ODS 310 with an object id=I and graphic data of an ODS 315 with the object id=2 are stored in the first buffer 233 at a time indicated by the PTS information included in the ODSs 310 and 315. At this time, no data is stored in the page composition buffer 235. In general, an instance where all object data stored in the first buffer 233 is no longer used and a new display set is input to the first buffer 233 to process new object data is called mode conversion. A first PCS input during mode conversion has no data or is a dummy PCS. Accordingly, a graphic data processing apparatus 230 decodes only necessary objects of the first display set 305 through 320 until a subsequent mode conversion and stores the necessary objects in the first buffer 233. Therefore, there is no data in the second buffer 234.

FIG. 4B is a diagram illustrating a state in which a second display set 325 through 330 having a PCS 325 with the page id=2 is stored in the buffers.

Referring to FIG. 3, the second display set 325 through 330 having the PCS 325 with the page id=2 includes the PCS 325 and an END 330. The second display set 325 through 330 includes the page composition information to display the objects of the first display set 305 through 320 with the page id=1 stored in the first buffer 233 on the display screen. Accordingly, the PCS 325 with the page id=2 includes position information indicating which graphic objects are displayed and where the graphic objects are displayed on the display screen. The image controller 236 controls the first buffer 233 using the page composition information of the PCS 325 with the page id=2 so that the graphic objects corresponding to the ODS 310 with the object id=1 and the ODS 315 with the object id=2 is transmittable to the second buffer 234 and the screen may be composed. At a time indicated by the PTS information included in the PCS 325, graphic screen data of a completely composed screen is output from the second buffer 234 to the display device.

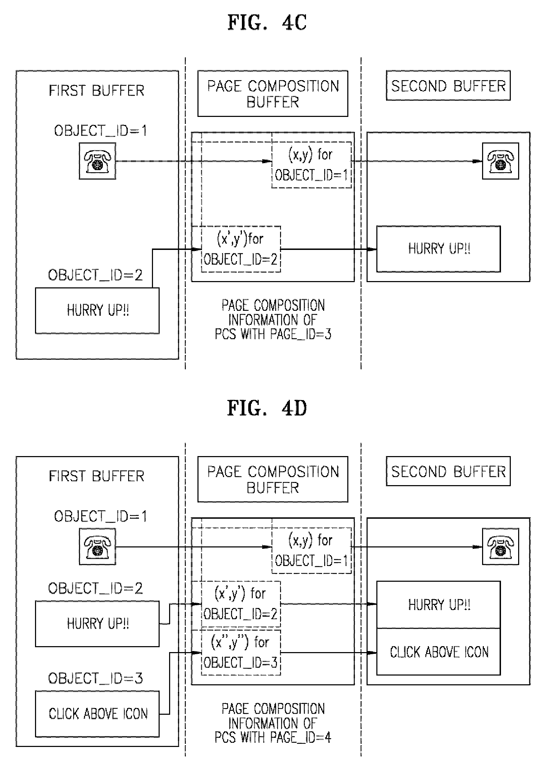

FIG. 4C is a diagram illustrating a state in which a third display set 335 through 345 having a PCS 335 with the page id=3 is stored in the buffers.

Referring to FIG. 3, the third display set 335 through 345 having the PCS 335 with the page id=3 includes the PCS 335, an ODS 340 with the object id=2, and an END 345. The ODS 340 included in the third display set 335 through 345 having the PCS 335 with the page id=3 has a common object id as that of the ODS 315 of the ODSs 310 and 315 of the first display set 305 through 320 having the PCS 305 with the page id=1. Since the ODS 340 having the common object id as that of the ODS 315 overlies the ODS 315, the ODS 340 consequently performs an update operation. That is, although the page composition information of the PCS does not change, an updated object is reflected on the display screen such that at a time indicated by PTS information of the pertinent PCS, graphic data, which is stored in the second buffer 234, of a completely composed screen is output to the display device.

FIG. 4D is a diagram illustrating a state in which a fourth display set 350 through 360 having a PCS 350 with the page id=4 is stored in the buffers.

Referring to FIG. 3, the fourth display set 350 through 360 having the PCS 350 with the page id=4 includes the PCS 350 containing new page composition information, an ODS 355 with the object id=3, and an END 360. After the graphic processing apparatus 230 stores data corresponding to each segment in the first buffer 233, the second buffer 234, and the page composition buffer 235, the graphic processing apparatus 230 outputs data, which is stored in the second buffer 235, of a completely composed screen to the display device at a time indicated by PTS information of the PCS 350 with the page id=4.

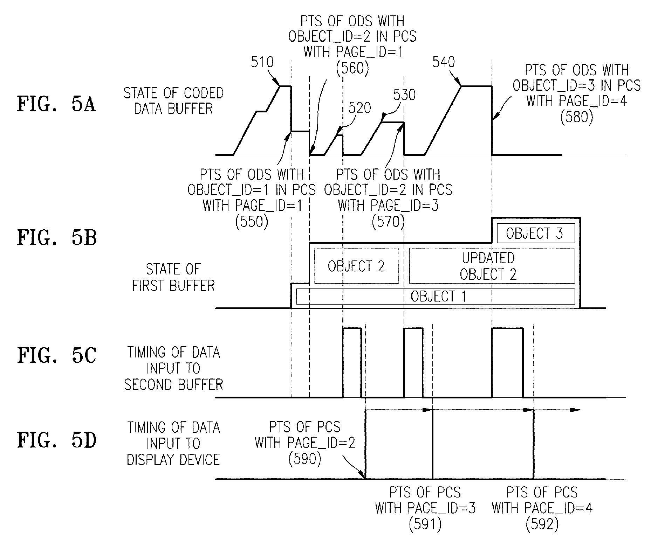

FIGS. 5A-5D are diagrams illustrating a process of inputting and outputting data to and from the buffers in accordance with a passage of time.

Referring to FIG.5A-5D, all of the PCS 305, ODS 310 and 315 and END 320 of the first display set 305 through 320 are stored in the coded data buffer 231 at a time 510 indicated by PTS information included in an MPEG-2 TS header of a pertinent packet, and are output from the coded data buffer 231, decoded in the decoder 232, and stored in the first buffer 233 between times 550 and 560 indicated by PTS information of the respective ODSs 310 and 315. As previously explained, a time when one object is output from the coded data buffer 231 theoretically is equal to a time when the object is decoded in the decoder 232 and stored in the first buffer 233. However, in actuality, since time is taken to decode the object, the value of the time 560 indicated by the PTS information of the ODS 315 with the object id=2 is greater than that of the time 550 indicated by the PTS information of the ODS310 with the object id=I.

Accordingly, a first graphic object of theODS310 with the object id=I is output from the coded data buffer 231 and is decoded and stored in the first buffer 233 at the time 550 indicated by the PTS information of the ODS 310 with the object id=I. A second graphic object of the ODS 315 with the object id=2 is output from the coded data buffer 231, and then decoded and stored in the first buffer 233 at the time 560 indicated by the PTS information of the ODS 315 with the object id=2.

All the PCS 325 and END 330 of the second display set 325 through 330 are stored in the coded data buffer 231 at a time 530 indicated by PTS information included in a header of the pertinent packet. The PCS 325 is decoded in the decoder 232 and stored in the page composition buffer 235. The image controller 236 controls the first buffer 233 to transmit the object necessary to compose the pertinent screen from the first buffer 233 to the second buffer 234 based on the page composition information. A time when the object stored in the first buffer 233 is transmitted to the second buffer 234 and the screen composition starts, is the same as a time indicated by the PTS information of the ODS, which is stored last in the first buffer 233.

However, since the PCS 305 of the first display set 305 through 320 is a dummy PCS with no page composition information, the ODS 315 with the object id=2, which is stored last, is not transmitted to the second buffer 234 at the time indicated by the PTS information thereof, and not used in the screen composition. When the image controller 236 uses the PCS information of the second display set 325 through 330 which is decoded and stored in the page composition buffer 235, the first graphic object with the object id=1 and the second graphic object with the object id=2, which are necessary for the screen composition, are transmitted from the first buffer 233 to the second buffer 234 such that the screen composition starts. At a time 590 indicated by PTS information of the PCS 325 with the page id=2, the graphic screen data of a completely composed screen is output to the display screen.

All of the PCS 335, ODS 340, and END 345 of the third display set 335 through 345 are stored in the coded data buffer 231 at a time 530 indicated by PTS information included in a header of the pertinent packet and are output from the coded data buffer 231, decoded, and immediately stored in the first buffer 233 at a time 570 indicated by the PTS information of the ODS 340 of the third display set 335 through 345. At this time, since the ODS 340 included in the third display set 335 through 345 uses a common object id as that of the ODS 315, which has already been stored in the first buffer 233, the ODS 340 overlies the previously stored second object of the ODS 315. As a result, an updated second object is obtainable.

However, since the PCS 335 with the page id=3 performs the screen composition using the ODSs 310 and 340 with the object id=1 and the object id=2, the ODS 340 with the object id=2 is stored last in the first buffer 233 at the time indicated by the PTS information of the ODS 340, and is simultaneously transmitted to the second buffer 234 to be used in the screen composition. At a time 591 indicated by the PTS information of the PCS 335 with the page id=3, a page of a completely composed screen is output to the display device. At this time, the second buffer 234 maintains a display screen output which is composed based on the page composition information of the PCS 325 with the page id=2 until the time indicated by the PTS information of the PCS 335 with the page id=3.

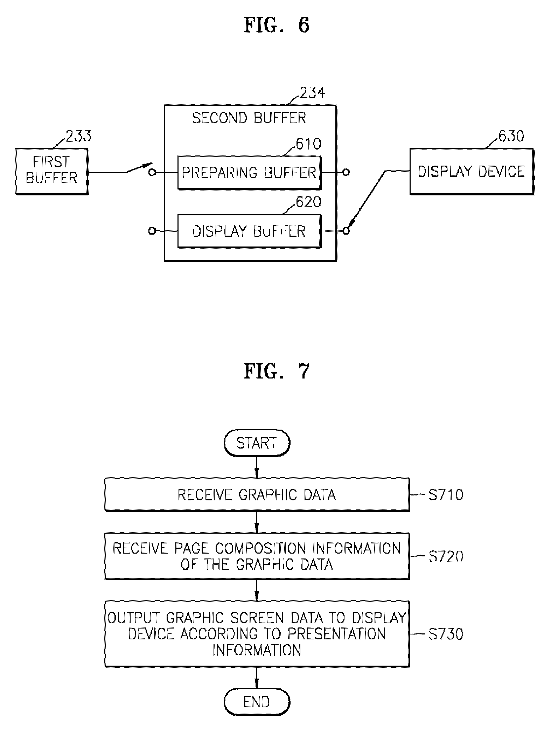

Furthermore, all of the PCS 350, ODS 355, and END 360 of the fourth display set 350 through 360 are stored in the coded data buffer 231 at a time 540 indicated by the PTS information included in a header of the pertinent packet and are output from the coded data buffer 231, decoded, and immediately stored in the first buffer 233 at a time 580 indicated by the PTS information of the ODS 355 of the fourth display set 350 through 360. At a time 592 indicated by the PTS information of the PCS 350 with the page id=4, a page of a completely composed screen is output to the display device. At this time, the second buffer 234 maintains a display screen output which is composed based on the page composition information of the PCS 335 with the page id=3 until the time indicated by the PTS information of the PCS 350 with the page id=4. Accordingly, the second buffer 234 includes a preparing bu ffer 610 and a display buffer 620 as shown in FIG. 6.

FIG. 6 is a detailed block diagram of the second buffer 234.

Referring to FIG. 6, the second buffer 234 includes the preparing buffer 610 and the display buffer 620. The preparing buffer 610 is a memory used in placing, with reference to the page composition information, objects input from the first buffer 233 at predetermined positions of the display screen. The display buffer 620 is a memory used in displaying data of the prepared display screen. At a time indicated by the PTS information of the PCS 305,325, 335 and 350, operations of the preparing buffer 610 and the display buffer 620 are exchanged and data of the completely composed screen is finally output to a display device 630.

In further detail with reference to FIGS. 4B and 4C, when the screen composition is completed with reference to the information of the PCS 325 with the page id=2, contents of the second buffer 234 of FIG. 4B are stored in the display buffer 620, and output to the display device 630. Screen composition proceeds in the preparing buffer 610 with reference to the information of the PCS 325 with the page id=3. At the time indicated by the PTS information of the PCS 335 with the page id=3, the operations of the preparing buffer 610 and the display buffer 620 are exchanged such that the contents of the second buffer 234 shown in FIG. 4 are output to the display device 630 and the data of the fourth display set 350 through 360 is input to the preparing buffer 610 in a common manner as described above so as to be used in the screen composition.

FIG. 7 is a flow chart illustrating an operation of outputting graphic display data of a completely composed page to the display device.

In operation S710, graphic data is received. In operation S720, page composition information which describes a page composition of the graphic data is received. In step operation S730, graphic screen data which is composed with reference to the page composition information of the graphic data is output to the display screen according to presentation information which indicates when the graphic screen data is output to the display screen. The presentation information is recorded in a page composition segment including the page composition information. Further, if a plurality of graphic data values exists, a graphic display screen composition starts with reference to the presentation information of a respective one of the graphic data values, among the plurality of graphic data values, that was last input.

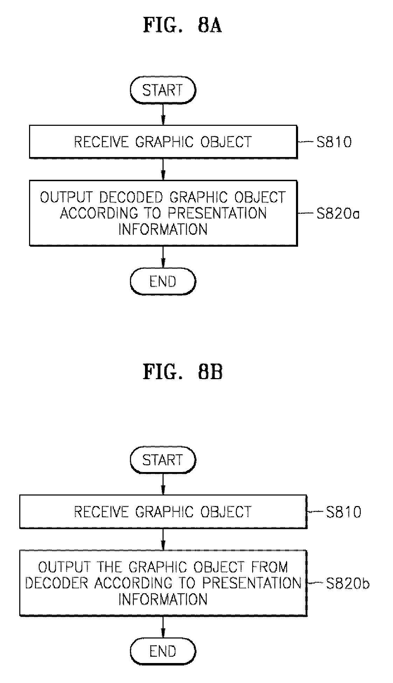

FIG. 8A is a flow chart illustrating an operation of outputting a decoded graphic object.

In operation S810, a graphic object of which a graphic data screen is composed is received. In operation S820a, a decoded graphic object is output according to presentation information indicating when the graphic object is decoded and output.

FIG. 8B is a flow chart illustrating an operation of inputting a graphic object to the decoder.

In operation S810, a graphic object of which a graphic screen is composed is received. In operation S820b, the graphic object is input to the decoder 232 to be decoded according to presentation information indicating when the graphic object is input to the decoder 232.

In theory, assuming that a decoding time in the decoder 232 is 0, FIGS. 8A and 8B show that a time when the graphic object is input to the decoder 232 is the same as a time when the graphic object is output from the decoder 232. The presentation information is recorded in an object display segment having the graphic object. Thus, according to the invention, if a plurality of graphic objects exist, time values, respectively, indicated by presentation information of the graphic objects have a pre- determined time interval therebetween.

This invention may be embodied in a general purpose digital computer by running a program from a computer usable medium, including but not limited to, storage media such as magnetic storage media (e.g., ROMs, floppy discs, hard discs, etc.), optically readable media (e.g. , CD-ROMs, DVDs, etc.), and carrier waves (e.g., transmissions over the Internet). The computer readable recording medium may be dispersively installed in a computer system connected to a network, and stored and executed as a computer readable code by a distributed computing environment.

Although a few preferred embodiments have been shown and described, it will be appreciated by those skilled in the art that various changes and modifications might be made without departing from the scope of the invention, as defined in the appended claims.

## Claims

1. An information storage medium including graphic data comprising a display set, the display set comprising:
a page composition segment which includes information about a composition of a graphic screen and a first presentation time stamp information;
an object display segment which includes coded graphic object data defining a graphic object to
appear on the graphic screen, size information on a display size of the graphic object and a second presentation time stamp information; and
an end segment which indicates an end of the display set,
wherein the first presentation time stamp information indicates when graphic screen data defining the graphic screen composed from the page composition segment and the object display segment is output to a display device, wherein the second presentation time stamp information indicates when decoding and storing of the coded graphic object data in a first buffer of a reproducing device reproducing from the information storage
medium is to be completed, and
wherein the graphic object data is identified by an object identifier.

2. The information storage medium of claim 1, wherein the display set comprises a plurality of object display segments, and the composition of the graphic screen starts at a time specified by the second presentation time stamp information of one of the plurality of object display segments whose graphic object data was last decoded.

3. An apparatus for processing graphic data, the apparatus comprising:
a reader which is arranged to read the graphic data from an information storage medium, the graphic data comprising a display set comprising an object display segment and a page composition segment, the object display segment comprising graphic object data defining a graphic object to appear on a graphic screen and size information on a display size of the graphic object, the page composition segment comprising composition information specifying how the graphic object is to be displayed on the graphic screen;
a coded data buffer (231) which stores the read graphic data;
a decoder (232) which decodes the object display segment to obtain decoded graphic object data;
a page composition buffer (235) which stores the composition information;
a first buffer (233) which stores the decoded graphic object data;
an image controller (236) which composes the graphic screen using the page composition information stored in the page composition buffer (235) and the decoded graphic object data stored in the first buffer (233); and
a second buffer (234) which stores the composed graphic screen,
wherein the composition segment further comprises a first presentation time stamp information indicating when the composed graphic screen is output to a display device,
wherein the object display segment further comprises a second presentation time stamp information indicating when storing of the graphic object data in the first buffer (233) is to be completed, and
wherein the graphic object data is identified by an object identifier.

4. The apparatus of claim 3, wherein the display set comprises a plurality of object display segments, and the composition of the graphic screen starts at a time specified by the second presentation time stamp information of one of the plurality of object display segments whose graphic object data was last decoded.

5. A method of processing graphic data, the method comprising:
reading the graphic data from an information storage medium, the graphic data comprising a display set comprising an object display segment and a page composition segment, the object display segment comprising graphic object data defining a graphic object to appear on a graphic screen and size information on a display size of the graphic object, the page composition segment comprising composition information specifying how the graphic object is to be displayed on the graphic screen;
decoding the object display segment to obtain decoded graphic object data;
storing the composition information in a page composition buffer;
storing the decoded graphic object data in a first buffer; and
composing the graphic screen using the page composition information stored in the page composition buffer and the decoded graphic object data stored in the first buffer,
wherein the page composition segment further comprises a first presentation time stamp information indicating when graphic screen data defining the graphic screen composed from the page composition segment and the object display segment is output to a display device,
the object display segment further comprises a second presentation time stamp information indicating when storing of the graphic object data in the first buffer is to be completed, and
the graphic object data is identified by an object identifier.

6. The method of claim 5, wherein the display set comprises a plurality of object display segments, and the composition of the graphic screen starts at a time specified by the second presentation time stamp information of one of the plurality of object display segments whose graphic object data was last decoded.

## Patentansprüche

1. Informationsspeichermedium, das grafische Daten beinhaltet, die einen Anzeigesatz aufweisen, wobei der Anzeigesatz Folgendes aufweist:
ein Seitenzusammensetzungssegment, welches Informationen über eine Zusammensetzung eines Grafikbildschirms und eine erste Darstellungszeitstempelinformation beinhaltet;
ein Objektanzeigesegment, welches codierte grafische Objektdaten, die ein grafisches Objekt definieren, das auf dem Grafikbildschirm erscheinen soll, Größeninformationen zu einer Anzeigegröße des grafischen Objektes und eine zweite Darstellungszeitstempelinformation beinhaltet; und
ein Endsegment, welches ein Ende des Anzeigesatzes angibt,
wobei die erste Darstellungszeitstempelinformation angibt, wenn Grafikbildschirmdaten, die den Grafikbildschirm definieren, der aus dem Seitenzusammensetzungssegment und dem Objektanzeigesegment zusammengesetzt ist, an ein Anzeigegerät ausgegeben werden,
wobei die zweite Darstellungszeitstempelinformation angibt, wenn Decodierung und Speicherung der codierten grafischen Objektdaten in einem ersten Puffer eines reproduzierenden Gerätes, welches aus dem Informationsspeichermedium reproduziert, abgeschlossen werden sollen, und
wobei die grafischen Objektdaten durch einen Objektidentifikator identifiziert werden.

2. Informationsspeichermedium nach Anspruch 1, wobei der Anzeigesatz mehrere Objektanzeigesegmente aufweist, und die Zusammensetzung des Grafikbildschirms zu einer Zeit beginnt, die durch die zweite Darstellungszeitstempelinformation von einem der mehreren Objektanzeigesegmente spezifiziert wird, dessen grafische Objektdaten als letztes decodiert wurden.

3. Vorrichtung zur Verarbeitung grafischer Daten, wobei die Vorrichtung Folgendes aufweist:
ein Lesegerät, welches zum Lesen der grafischen Daten aus einem Informationsspeichermedium geeignet ist, wobei die grafischen Daten einen Anzeigesatz aufweisen, der ein Objektanzeigesegment und ein Seitenzusammensetzungssegment aufweist, wobei das Objektanzeigesegment grafische Objektdaten, die ein grafisches Objekt definieren, das auf einem Grafikbildschirm erscheinen soll, und Größeninformationen zu einer Anzeigegröße des grafischen Objektes aufweist, wobei das Seitenzusammensetzungssegment Zusammensetzungsinformationen aufweist, die spezifizieren, wie das grafische Objekt auf dem Grafikbildschirm angezeigt werden soll;
einen codierten Datenpuffer (231), welcher die gelesenen grafischen Daten speichert;
einen Decoder (232), welcher das Objektanzeigesegment decodiert, um decodierte grafische Objektdaten zu erhalten;
einen Seitenzusammensetzungspuffer (235), welcher die Zusammensetzungsinformationen speichert;
einen ersten Puffer (233), welcher die decodierten grafischen Objektdaten speichert;
einen Bildcontroller (236), welcher den Grafikbildschirm unter Verwendung der Seitenzusammensetzungsinformationen, die in dem Seitenzusammensetzungspuffer (235) gespeichert sind, und der decodierten grafischen Objektdaten, die in dem ersten Puffer (233) gespeichert sind, zusammensetzt; und
einen zweiten Puffer (234), welcher den zusammengesetzten Grafikbildschirm speichert,
wobei das Zusammensetzungssegment ferner eine erste Darstellungszeitstempelinformation aufweist, die angibt, wenn der zusammengesetzte Grafikbildschirm an ein Anzeigegerät ausgegeben wird,
wobei das Objektanzeigesegment ferner eine zweite Darstellungszeitstempelinformation aufweist, die angibt, wenn das Speichern der grafischen Objektdaten in dem ersten Puffer (233) abgeschlossen werden soll, und
wobei die grafischen Objektdaten durch einen Objektidentifikator identifiziert werden.

4. Vorrichtung nach Anspruch 3, wobei der Anzeigesatz mehrere Objektanzeigesegmente aufweist, und die Zusammensetzung des Grafikbildschirms zu einer Zeit beginnt, die durch die zweite Darstellungszeitstempelinformation von einem der mehreren Objektanzeigesegmente spezifiziert wird, dessen grafische Objektdaten als letztes decodiert wurden.

5. Verfahren zur Verarbeitung grafischer Daten, wobei das Verfahren Folgendes aufweist:
Lesen der grafischen Daten aus einem Informationsspeichermedium, wobei die grafischen Daten einen Anzeigesatz aufweisen, der ein Objektanzeigesegment und ein Seitenzusammensetzungssegment aufweist, wobei das Objektanzeigesegment grafische Objektdaten, die ein grafisches Objekt definieren, das auf einem Grafikbildschirm erscheinen soll, und Größeninformationen zu einer Anzeigegröße des grafischen Objektes aufweist, wobei das Seitenzusammensetzungssegment Zusammensetzungsinformationen aufweist, die spezifizieren, wie das grafische Objekt auf dem Grafikbildschirm angezeigt werden soll;
Decodieren des Objektanzeigesegmentes zum Erhalten decodierter grafischer Objektdaten;
Speichern der Zusammensetzungsinformationen in einem Seitenzusammensetzungspuffer;
Speichern der decodierten grafischen Objektdaten in einem ersten Puffer; und
Zusammensetzen des Grafikbildschirms unter Verwendung der Seitenzusammensetzungsinformationen, die in dem Seitenzusammensetzungspuffer gespeichert sind, und der decodierten grafischen Objektdaten, die in dem ersten Puffer gespeichert sind,
wobei das Seitenzusammensetzungssegment ferner eine erste Darstellungszeitstempelinformation aufweist, die angibt, wenn Grafikbildschirmdaten, die den Grafikbildschirm definieren, der aus dem Seitenzusammensetzungssegment und dem Objektanzeigesegment zusammengesetzt ist, an ein Anzeigegerät ausgegeben werden,
wobei das Objektanzeigesegment ferner eine zweite Darstellungszeitstempelinformation aufweist, die angibt, wenn das Speichern der grafischen Objektdaten in dem ersten Puffer abgeschlossen werden soll, und
wobei die grafischen Objektdaten durch einen Objektidentifikator identifiziert werden.

6. Verfahren nach Anspruch 5, wobei der Anzeigesatz mehrere Objektanzeigesegmente aufweist, und die Zusammensetzung des Grafikbildschirms zu einer Zeit beginnt, die durch die zweite Darstellungszeitstempelinformation von einem der mehreren Objektanzeigesegmente spezifiziert wird, dessen grafische Objektdaten als letztes decodiert wurden.

## Revendications

1. Support de stockage d'informations comprenant des données graphiques comprenant un ensemble d'affichage, l'ensemble d'affichage comprenant :
un segment de composition de page qui comporte des informations sur une composition d'un écran graphique et de premières informations d'horodatage de présentation ;
un segment d'affichage d'objet qui comprend des données d'objet graphique codées définissant un objet graphique devant apparaître sur l'écran graphique, des informations de taille sur une taille d'affichage de l'objet graphique et de secondes informations d'horodatage de présentation ; et
un segment d'extrémité qui indique une extrémité de l'ensemble d'affichage,
dans lequel les premières informations d'horodatage de présentation indiquent le moment auquel des données d'écran graphique définissant l'écran graphique composé à partir du segment de composition de page et du segment d'affichage d'objet sont fournies à un dispositif d'affichage,
dans lequel les secondes informations d'horodatage de présentation indiquent le moment auquel le décodage et le stockage des données d'objet graphique codées dans un premier tampon d'un dispositif de reproduction reproduisant à partir du support de stockage d'informations doivent être effectués, et
dans lequel les données d'objet graphique sont identifiées par un identificateur d'objet.

2. Support de stockage d'informations selon la revendication 1, dans lequel l'ensemble d'affichage comprend une pluralité de segments d'affichage d'objet, et la composition de l'écran graphique commence à un moment spécifié par les secondes informations d'horodatage de présentation de l'un de la pluralité de segments d'affichage d'objet dont les données d'objet graphique ont été décodées en dernier.

3. Appareil pour traiter des données graphiques, l'appareil comprenant :
un lecteur qui est agencé pour lire les données graphiques à partir d'un support de stockage d'informations, les données graphiques comprenant un ensemble d'affichage comprenant un segment d'affichage d'objet et un segment de composition de page, le segment d'affichage d'objet comprenant des données d'objet graphique définissant un objet graphique devant apparaître sur un écran graphique et des informations de taille sur une taille d'affichage de l'objet graphique, le segment de composition de page comprenant des informations de composition spécifiant la façon dont l'objet graphique doit être affiché sur l'écran graphique ;
un tampon de données codées (231) qui stocke les données graphiques lues ;
un décodeur (232) qui décode le segment d'affichage d'objet pour obtenir des données d'objet graphique décodées ;
un tampon de composition de page (235) qui stocke les informations de composition ;
un premier tampon (233) qui stocke les données d'objet graphique décodées ;
un contrôleur d'image (236) qui compose l'écran graphique en utilisant les informations de composition de page stockées dans le tampon de composition de page (235) et les données d'objet graphique décodées stockées dans le premier tampon (233) ; et
un second tampon (234) qui stocke l'écran graphique composé,
dans lequel le segment de composition comprend en outre de premières informations d'horodatage de présentation indiquant le moment auquel l'écran graphique composé est fourni à un dispositif d'affichage,
dans lequel le segment d'affichage d'objet comprend en outre de secondes informations d'horodatage de présentation indiquant le moment auquel le stockage des données d'objet graphique dans le premier tampon (233) doit être effectué, et
dans lequel les données d'objet graphique sont identifiées par un identificateur d'objet.

4. Appareil selon la revendication 3, dans lequel l'ensemble d'affichage comprend une pluralité de segments d'affichage d'objet, et la composition de l'écran graphique commence à un moment spécifié par les secondes informations d'horodatage de présentation de l'un de la pluralité de segments d'affichage d'objet dont les données d'objet graphique ont été décodées en dernier.

5. Procédé de traitement de données graphiques, le procédé comprenant de :
lire les données graphiques à partir d'un support de stockage d'informations, les données graphiques comprenant un ensemble d'affichage comprenant un segment d'affichage d'objet et un segment de composition de page, le segment d'affichage d'objet comprenant des données d'objet graphique définissant un objet graphique devant apparaître sur un écran graphique et des informations de taille sur une taille d'affichage de l'objet graphique, le segment de composition de page comprenant des informations de composition spécifiant la façon dont l'objet graphique doit être affiché sur l'écran graphique ;
décoder le segment d'affichage d'objet pour obtenir des données d'objet graphique décodées ;
stocker les informations de composition dans un tampon de composition de page ;
stocker les données d'objet graphique décodées dans un premier tampon ; et
composer l'écran graphique en utilisant les informations de composition de page stockées dans le tampon de composition de page et les données d'objet graphique décodées stockées dans le premier tampon,
dans lequel le segment de composition de page comprend en outre de premières informations d'horodatage de présentation indiquant le moment auquel des données d'écran graphique définissant l'écran graphique composé à partir du segment de composition de page et du segment d'affichage d'objet sont fournies à un dispositif d'affichage,
le segment d'affichage d'objet comprend en outre de secondes informations d'horodatage de présentation indiquant le moment auquel le stockage des données d'objet graphique dans le premier tampon doit être effectué, et
les données d'objet graphique sont identifiées par un identificateur d'objet.

6. Procédé selon la revendication 5, dans lequel l'ensemble d'affichage comprend une pluralité de segments d'affichage d'objet, et la composition de l'écran graphique commence à un moment spécifié par les secondes informations d'horodatage de présentation de l'un de la pluralité de segments d'affichage d'objet dont les données d'objet graphique ont été décodées en dernier.
